# EUROPÄISCHE PATENTSCHRIFT

(11) **EP 3 418 736 B1**
(45) Veröffentlichungstag und Bekanntmachung des Hinweises auf die Patenterteilung: **14.08.2019**
(21) Anmeldenummer: 18176674.2
(22) Anmeldetag: 08.06.2018
(51) Int. Cl.: G01N 29/04, B06B 1/06, G01N 29/34, G01N 29/42, G01N 29/44

(54) **VERFAHREN UND VORRICHTUNG ZUR BREITBANDMESSUNG MIT MULTIELEMENT-LUFTULTRASCHALLSCHALLWANDLERN**
METHOD AND APPARATUS FOR BROADBAND MEASUREMENT WITH MULTI- ELEMENT AIR ULTRASOUND SOUND TRANSDUCERS
PROCÉDÉ ET DISPOSITIF DE MESURE DE BANDE DE LARGEUR À L'AIDE D'UN TRANSDUCTEUR D'ULTRA-SONS D'AIR MULTIÉLÉMENTAIRE

(30) Priorität: 23.06.2017 EP 17177656
(43) Veröffentlichungstag der Anmeldung: 26.12.2018
(73) Patentinhaber: Sonotec Ultraschallsensorik Halle GmbH, 06112 Halle / Saale (DE)
(72) Erfinder: BODI, Andreas, 06295 Lutherstadt Eisleben (DE); STEINHAUSEN, Ralf, 06108 Halle (Saale) (DE); KIEL, Mario, 06388 Edderitz (DE); GAUTZSCH, Tobias, 04155 Leipzig (DE)
(74) Vertreter: Maikowski & Ninnemann Patentanwälte Partnerschaft mbB

(56) Entgegenhaltungen:
- EP-A1- 0 166 976
- US-A1- 2013 294 201

## Beschreibung

### Gebiet der Erfindung

Die Erfindung liegt auf dem Gebiet der zerstörungsfreien Prüfung, insbesondere auf dem Gebiet der Prüfung mittels Ultraschall und betrifft ein Luftultraschallsystem und ein Verfahren für die luftgekoppelte Ultraschallprüfung. Die Erfindung betrifft weiterhin die Verwendung des Verfahrens oder des Luftultraschallsystems zur Oberflächencharakterisierung und/oder zur Prüfung von Kompositmaterialien, Klebeverbindungen und Materialverbunden auf Fehler, wie Lufteinschlüsse, Delaminationen, Klebefehler, Verunreinigungen, Kanäle, Risse und Kissing Bonds. Des Weiteren stellt die Erfindung einen speziellen Multielementultraschallwandler und Computerprogrammprodukte für die Ansteuerung des Multielementultraschallwandlers und die Auswertung von Luftultraschallmessungen bereit.

### Hintergrund der Erfindung

Für die Prüfung von Kompositverklebungen müssen aufgrund der Vielzahl von auftretenden Fehlern (Lufteinschlüsse, Delaminationen, Klebefehler, Verunreinigungen, Kanäle, Risse, Kissing Bonds) unterschiedliche Messverfahren eingesetzt werden. Dies erhöht den Prüfaufwand erheblich. Zudem ist bislang kein Verfahren bekannt, welches sog. Kissing Bonds an Faser-Verbund-Werkstoffen sicher detektieren kann. Es sind Verfahren zur Prüfung von Metallverbunden bekannt, jedoch sind diese Verfahren nicht auf die Faserverbundwerkstoffe übertragbar.

Durch die große Vielfalt an auftretenden Fehlern sind die Anforderungen an die Messaufgabe sehr vielfältig. Aufgrund der unterschiedlichen lateralen und axialen Ausdehnungen der Fehler sowie unterschiedlichem Dämpfungsverhalten ist es notwendig, so breitbandig wie nur möglich zu messen. Aktuelle Luftultraschallprüfköpfe sind Aufgrund der notwendigen hohen Empfindlichkeit schmalbandig ausgeführt. Bandbreiten, wie sie in der Tauchtechnik oder Kontakttechnikmessung umgesetzt werden, sind im Bereich der Luftultraschallprüfung aktuell nicht einsetzbar. Während bei Kontakt- bzw. Tauchtechnikmessungen Bandbreiten von 80-100% gängig sind, wird im Bereich der Luftultraschallprüfung mit Bandbreiten unter 30% gearbeitet. Um die beschriebenen Fehler sicher erfassen zu können, reichen diese Bandbreiten jedoch nicht aus. Um die Vielzahl der möglichen Fehler detektieren zu können, ist es notwendig, die Probe bzw. den Prüfling mit mehreren Frequenzen zu untersuchen. Der dadurch entstehende Mehraufwand ist erheblich und führt oftmals zum Verwerfen des Prüfverfahrens.

Anwender nehmen die mit Tauch- und Kontakttechnik verbundenen Nachteile der Kontamination des Prüflings mit Koppelmittel in Kauf oder verzichten auf die aufwendige Flächenprüfung mit Ultraschall.

Es sind außerdem Verfahren bekannt, die durch Anregung mit variierten Frequenzen und Amplituden (Sweep, Chirp) versuchen, die Bandbreite von Ultraschallwandlern zu erhöhen. Diese Verfahren haben aber den erheblichen Nachteil, dass neben der deutlich begrenzten Erhöhung der Bandbreite die Impulslänge um ein vielfaches vergrößert wird. Bei vielen Messanwendungen ist jedoch ein möglichst kurzer Impuls notwendig. Die Messung mit Einzelimpulsen, wie es in der Kontakt- und Tauchtechnik der Fall ist, findet Aufgrund der hohen Ultraschalldämpfung bei der Luftultraschallmessung derzeit nur kleine Einsatzfelder.

DE 102013110900 A1 beschreibt einen Ultraschallwandler für die luftgekoppelte Prüfung unter Verwendung von Elektretfolien als aktives Material, einerseits zur Schallerzeugung und andererseits zur akustischen Anpassung auf das Übertragungsmedium Luft. DE 102013110900 A1 offenbart jedoch keine Möglichkeiten der Bandbreitenvergrößerung durch gezielte unterschiedliche Frequenzansteuerung einzelner Elemente eines Multielementultraschallwandlers.

US 2013/0294201 A1 offenbart Ultraschallwandler mit hoher Bandbreite auf Basis von Piezokompositen (pMUT), die zwei Elektroden aufweisen, sowie Arrays, die eine Vielzahl solcher Ultrabreitband-Ultraschallwandler aufweisen (pMUT arrays). Dieses Ultraschallsystem wird vorwiegend im medizinischen Bereich angewendet. Zum Ansteuern der ersten Elektrode wird eine eine Frequenz von 15 MHz und für die zweite Elektrode eine Frequenz im Bereich von 30-60 MHz verwendet. Diese Frequenzen und das Vorhandensein von nur 2 Elektroden sind für Ultraschallprüfungen, bei denen Luft als Koppelmittel dient, jedoch nicht geeignet. Weiterhin offenbart US 2013/0294201 A1 ein Array von Piezoelementen. Dies hat den Nachteil das die Einzelelemente phasenversetzt angesteuert werden. Die für die Luftultraschallprüfung von Kompositmaterialien sowie Verbunden auf Fehler notwendige Erhöhung der Bandbreite der Frequenzen ist zudem nicht möglich.

EP 0 166 976 A1 offenbart ein Ultraschallwandlersystem mit zwei Ultraschallwandlern, die jeweils eine voneinander verschiedene vorbestimmte Mittenfrequenz aufweisen und deren natürliche Foki sich überlagern Die mindestens zwei Ultraschallwandler sind gemeinsam auf einem Tragkörper angeordnet, wobei der erste Ultraschallwandler zylinderförmig ist und von einem zweiten holzylindrischen Ultraschallwandler umgeben ist. Die Abstrahlfläche beider Ultraschallwandler liegt dabei in einer Ebene und die beiden Ultraschallwandler sind akustisch, beispielsweise durch einen Luftspalt, voneinander getrennt. Die mindestens zwei Ultraschallwandler werden getrennt voneinander elektrisch angesteuert. EP 0 166 976 A1 betrifft generell das Problem, dass viele Übertragungsmedien z.B. biologische Gewebe Ultraschallsignale sehr stark und frequenzabhängig dämpfen und somit Einfluss auf die Höhe der Mittenfrequenz und der Bandbreite von Ultraschallsignalen haben. Eines der beiden Wandlerelemente kann in mehrere Teilschwinger unterteilt werden, die untereinander parallel geschaltet sind. Die Teilschwinger sind dann jedoch nicht ringförmig umeinander angeordnet. Das in EP 0 166 976 A1 vorgeschlagene Ultraschallwandlersystem soll in der Lage sein, die Bandbreite und somit die Bildqualität zu verbessern, insbesondere soll der Frequenzgang des Übertragungsmediums "Gewebe" kompensiert werden. Die Mittenfrequenz für den zylinderförmigen Ultraschallwandler beträgt beispielsweise 4 MHz, die Mittenfrequenz für den hohlzylindrischen Ultraschallwandler beispielsweise 2 MHz. Die akustischen Leistungen der beiden Ultraschallwandler beträgt beispielsweise 130. Diese Frequenzen, das Vorhandensein von nur 2 Elektroden und die akustische Leistung der beiden Ultraschallwandler sind für Ultraschallprüfungen, bei denen Luft als Koppelmittel dient, jedoch nicht geeignet. Ein Hinweis auf die Verwendung des Ultraschallsystems in der Luftultraschallprüfung von Materialdefekten ist der EP 0 166 976 nicht zu entnehmen.

DE 199 28 765 A1 offenbart eine Ultraschallwandleranordnung und ein Verfahren zur Ultraschallprüfung. Die Ultraschallwandleranordnung umfasst mindestens zwei in Abstrahlrichtung gesehen hintereinander gelegene Schwingerschichten, die einzeln oder in Kombination eine Gruppe bildend angesteuert werden. Mindestens zwei Gruppen werden dabei mit unterschiedlichen Frequenzen betrieben. Die erste und die zweite Frequenz sind entweder durch die Wahl geeigneter Dicken der Schwingerschichten oder durch das gemeinsame Ansteuern bestimmter Schwingerschichten wählbar. DE 199 28 765 A1 offenbart nicht die ringförmige Anordnung der Elektroden. Somit ist es nicht möglich, mit der in DE 199 28 765 A1 offenbarten Ultraschallwandleranordnung ein Schallfeld zu erzeugen, dass sich mindestens in zwei Dimensionen homogen im Raum ausbreitet. Ultraschallwandler sind für Ultraschallprüfungen, bei denen Luft als Koppelmittel dient, jedoch nicht geeignet. Ein Hinweis auf die Verwendung der Ultraschallwandleranordnung in der Luftultraschallprüfung von Materialdefekten ist der DE 199 28 765 A1 nicht zu entnehmen.

DE 40 10 294 A1 offenbart eine aus einem mehrlagigen piezoelektrischen Material gebildete Ultraschallsonde. Die einzelnen piezoelektrischen Schichten sind dabei in Abstrahlrichtung gesehen hintereinander angeordnet. DE 40 10 294 A1 offenbart keine Ultraschallsonde, in der die Elektroden ringförmig und umeinander angeordnet sind. Ein Hinweis auf die Verwendung der Ultraschallsonde in der Luftultraschallprüfung von Materialdefekten ist der DE 40 10 294 A1 nicht zu entnehmen.

### Beschreibung der Erfindung

Die Aufgabe der Erfindung besteht darin, die Nachteile des Standes der Technik zu überwinden und ein Luftultraschallsystem und ein Verfahren bereitzustellen, die speziell an die Luftultraschallprüfung angepasst und für die Prüfung von Kompositmaterialien und Verbunden auf Fehler, wie Lufteinschlüsse, Delaminationen, Klebefehler, Verunreinigungen, Kanäle, Risse, Kissing Bonds usw. geeignet sind.

Die vorliegende Erfindung betrifft die luftgekoppelte Ultraschallprüfung mit Luft als Koppelmittel. Dabei ergibt sich ein besonderes technisches Problem: Bei klassischen Ultraschallprüfköpfen wird das Ultraschallsignal an der Grenzfläche von Prüfkopf zu Luft nahezu vollständig reflektiert. Nur ein sehr geringer Teil des Signals kann den Prüfkopf verlassen bzw. von ihm empfangen werden. Entsprechend hoch sind die Verluste durch Reflexion beim Passieren der Grenzflächen. Hervorzuheben ist, dass bei der luftgekoppelten Ultraschall-Prüfung mindestens vier Grenzflächen zu überwinden sind, wodurch sich eine beträchtliche Signaldämpfung ergibt. Unter einer Grenzfläche wird in diesem Zusammenhang der Kontaktbereich zwischen Luft oder einem anderen Gas oder Gasgemisch und einem Feststoff verstanden. Dieser Feststoff kann beispielsweise die Oberfläche des Prüfkörpers oder die Oberfläche des Ultraschallwandlers sein. Durch die beträchtliche Signaldämpfung bei der luftgekoppelten Ultraschall-Prüfung ergeben sich spezifische Anforderungen an den Aufbau und die akustische Leistung der Ultraschallsonden.

Die Aufgabe der Erfindung wird gelöst durch ein ein Luftultraschallsystem zur luftgekoppelten Prüfung von Materialien, das einen Ultraschallwandler als Sender und einen Ultraschallwandler als Empfänger, Sende-Empfangselektronik mit Digitalisierer und eine Recheneinheit mit Ansteuer- und Auswertesoftware aufweist, wobei die Ultraschallwandler Multielementultraschallwandler sind und jeweils mindestens drei oder vier Sendeelemente und/oder Empfangselemente aufweisen, dadurch gekennzeichnet, dass die Sendeelemente und/oder Empfangselemente so gestaltet sind, dass sie mit unterschiedlichen Frequenzen ansteuerbar sind, wobei ein erstes Sendeelement mit einer Frequenz von 370 bis 390 kHz, ein zweites Sendeelement mit einer Frequenz von 390 bis 410 kHz und ein drittes Sendeelement mit einer Frequenz von 410 bis 430 kHz angesteuert wird.

Kernstück der Erfindung bildet der Ultraschallwandler, der aus mehreren Sendeelementen und/oder Empfangselementen besteht. Unter einem Ultraschallwandler wird insbesondere ein Signalwandler verstanden, der akustische Schwingungen in elektronische bzw. elektrische Signale wandelt und/oder umgekehrt. Der hier beschriebene Wandler kann sowohl elektrische Signale in akustische Signale umwandeln, als auch akustische in elektrische Signale.

Vorzugsweise weist der Ultraschallwandler 3, 4, 5 oder mehr Sendeelemente und/oder Empfangselemente auf. Erfindungsgemäß weist der Ultraschallwandler drei oder vier Sendeelemente und/oder Empfangselemente auf, wobei die Sendeelemente und/oder Empfangselemente mit unterschiedlichen Frequenzen ansteuerbar sind bzw. angesteuert werden. Durch Überlagerung der Schallfelder der Sendeelemente ergibt sich ein Summensignal. Bei der herkömmlich eingesetzten Phased Array Technologie werden die Einzelelemente (des Sendewandlers) phasenversetzt angesteuert. Das Summensignal kann durch diese Art der Anregung räumlich gesteuert werden. Die für die Prüfung von Kompositmaterialien sowie Verbunden auf Fehler notwendige Erhöhung der Bandbreite ist jedoch nicht möglich. Die erfindungsgemäße Vorrichtung, insbesondere der erfindungsgemäße Ultraschallwandler hat den Vorteil, dass durch Ansteuern der Sendeelemente und/oder Empfangselemente mit unterschiedlichen Frequenzen eine deutliche Erhöhung der Bandbreite des Messsignals ermöglicht wird.

Die Erfindung betrifft deshalb auch einen Multielementultraschallwandler, der mindestens drei oder vier Sendeelemente und/oder Empfangselemente aufweist, dadurch gekennzeichnet, dass die Sendeelemente und/oder Empfangselemente so gestaltet sind, dass ein erstes Sendeelement mit einer Frequenz von 370 bis 390 kHz, ein zweites Sendeelement mit einer Frequenz von 390 bis 410 kHz und ein drittes Sendeelement mit einer Frequenz von 410 bis 430 kHz angesteuert wird.

Die räumliche Ausbreitung des Ultraschalls und die Homogenität des Schallfeldes werden maßgeblich durch die Form der Einzelelemente beeinflusst. Die Sendeelemente und/oder Empfangselemente des Multielementultraschallwandlers sind deshalb ringförmig oder kreisförmig gestaltet. Besonders bevorzugt ist es, wenn die Sendeelemente und/oder Empfangselemente des Multielementultraschallwandlers ringförmig oder kreisförmig gestaltet sind und umeinander angeordnet sind. Dies hat den Vorteil, dass mit ringförmigen, insbesondere umeinander angeordneten Wandlern ein Schallfeld erzeugt werden kann, dass sich mindestens in zwei Dimensionen homogen im Raum ausbreitet. Demgegenüber ist es mit einem linearen Array nur möglich, Schallfelder zu erzeugen, die sich nur in einer Dimension homogen ausbreiten.

Die Frequenz wird maßgeblich durch die Geometrie der Einzelelemente bestimmt. Die "Geometrie der Einzelelemente" im Sinne der Erfindung zielt auf die räumliche Gestalt der Einzelelemente, wie Breite, Dicke (Höhe) und Länge oder Durchmesser, ab. Die Einzelelemente sind deshalb vorzugsweise an die anzuregende Frequenz anpassbar. Insbesondere durch Variation der Dicke der Einzelelemente kann deren Frequenz variiert werden. Durch die Verwendung an sich bekannter Kompositmaterialien aus der Ultraschalltechnik ist die Variation der Dicke der Einzelelemente, und damit der Frequenz, möglich. In einer Ausführungsform der Erfindung können alle Einzelelemente des Multielementultraschallwandlers aus dem gleichen Kompositmaterial bestehen. In einer anderen Ausführungsform der Erfindung können die Einzelelemente des Multielementultraschallwandlers gemäß der Erfindung aus unterschiedlichen Kompositmaterialien bestehen. In einer weiteren Ausführungsform der Erfindung können die Sendeelemente des Multielementultraschallwandlers aus dem gleichen Kompositmaterial, und die Empfangselemente des Multielementultraschallwandlers aus einem anderen Kompositmaterial bestehen.

Die Sendeelemente und/oder Empfangselemente des Multielementultraschallwandlers gemäß der Erfindung bestehen üblicherweise aus piezoelektrischen Materialien. Die piezoelektrischen Materialien sind beispielsweise ausgewählt aus Einkristallen (Quarz, PMN-PT, PbTiO₃, BaTiO₃) und polykristallinen Keramiken (z.B. PZT, Bleimetaniobat). Diese werden als Volumenschwinger (Scheiben, Ringe, Zylinder) oder als Schichten auf Substraten verwendet. In den letzten Jahren haben neue Materialien wie piezoelektrische Folien (PVDF) und Keramik-Polymer-Komposite das Spektrum der Ultraschallprüfköpfe erheblich erweitert. Auch diese neuen Materialien sind für die Herstellung des Multielementultraschallwandlers gemäß der Erfindung geeignet.

In einer bevorzugten Ausführungsform der Erfindung weist die Sendeelektronik einen Signalprozessor, einen digitalen Verstärker und einen Sendewandler auf. In einer weiteren bevorzugten Ausführungsform der Erfindung weist die Empfangselektronik einen Empfangswandler, einen Vorverstärker, einen Verstärker und einen analog-/digital (a/d)-Wandler auf.

Die Bestandteile der Sendeelektronik und der Empfangselektronik sind dem Fachmann bekannt. Geeignet zur Verwendung im Luftultraschallsystem gemäß der Erfindung sind konventionell erhältliche Signalprozessoren, digitale Verstärker, Sendewandler, Empfangswandler, Vorverstärker und analog-/digital (a/d)-Wandler.

In einer besonders bevorzugten Ausführungsform der Erfindung ist die Sendeelektronik mehrkanalig und die Empfangselektronik mehrkanalig, wobei Sende- und Empfangselektronik mindestens so viele Kanäle aufweisen wie der Ultraschallwandler. Vorzugsweise weisen der Multikanalsender und der Multikanalempfänger 3, 4, 5 oder mehr Sendeelemente und/oder Empfangselemente auf. Besonders bevorzugt ist es, wenn der Multikanalsender und der Multikanalempfänger drei oder vier Sendeelemente und/oder Empfangselemente aufweisen.

Die Sendeelemente des Multielementultraschallwandlers senden typischerweise Ultraschallsignale mit verschiedenen Frequenzen im Bereich von 20 kHz und 10 MHz aus. Vorzugsweise senden die Sendeelemente des Multielementultraschallwandlers Ultraschallsignale mit verschiedenen Frequenzen im Bereich von 50 kHz bis 1 MHz, besonders bevorzugt im Bereich von 50 kHz bis 500 kHz oder von 100 kHz bis 250 kHz aus. Alternativ ist auch die Messung von Einzelwerten bei nur einer Frequenz möglich.

In einer bevorzugten Ausführungsform weist das Luftultraschallsystem einen Ultraschallwandler auf, der aus 3 ringförmigen, umeinander angeordneten Einzelelementen besteht, wobei das erste Element Ultraschallsignale mit einer Frequenz von 370 bis 390 kHz, das zweite Element Ultraschallsignale mit einer Frequenz von 390 bis 410 kHz und das dritte Element Ultraschallsignale mit einer Frequenz von 410 bis 430 kHz aussendet. In einer besonders bevorzugten Ausführungsform weist das Luftultraschallsystem einen Ultraschallwandler auf, der aus 3 ringförmigen, umeinander angeordneten Einzelelementen besteht, wobei das erste Element Ultraschallsignale mit einer Frequenz von 380 kHz, das zweite Element Ultraschallsignale mit einer Frequenz von 400 kHz und das dritte Element Ultraschallsignale mit einer Frequenz von 420 kHz aussendet. Diese Ausführungsformen des Erfindungsgemäßen Ultraschallwandlers haben sich überraschenderweise als besonders geeignet in der Oberflächencharakterisierung und/oder Prüfung von Kompositmaterialien, Klebeverbindungen und Materialverbunden auf Fehler, wie Lufteinschlüsse, Delaminationen, Klebefehler, Verunreinigungen, Kanäle, Risse und Kissing Bonds mittels luftgekoppeltem Ultraschall erwiesen.

Die Anordnung der Sendewandler und der Empfangswandler kann unterschiedlich sein. In einer Ausführungsform sind in dem erfindungsgemäßen Luftultraschallsystem Sendewandler und Empfangswandler in einem Prüfkopf enthalten. Dies ermöglicht die Durchführung der Ultraschallprüfung mit dem erfindungsgemäßen Luftultraschallsystem im Reflexionsbetrieb. In einer anderen, gleichermaßen bevorzugten Ausführungsform sind in dem erfindungsgemäßen Luftultraschallsystem Sendewandler und Empfangswandler getrennt voneinander als separate Prüfköpfe ausgeführt. Dies ermöglicht die Durchführung der Ultraschallprüfung mit dem erfindungsgemäßen Luftultraschallsystem im Durchschallungsbetrieb oder in der Pitch-Catch-Konfiguration.

Zur Ansteuerung des erfindungsgemäßen Ultraschallwandlers ist eine spezielle Sende-Empfangselektronik notwendig. Da die einzelnen Schwingerelemente des Multielementultraschallwandlers parallel angesteuert werden müssen, muss das Luftultraschallsystem mindestens genauso viele Kanäle haben, wie der Ultraschallwandler selbst. In einer besonders bevorzugten Ausführungsform der Erfindung ist der Multikanalsender so gestaltet, dass mit einer sehr hohen zeitlichen Genauigkeit alle Kanäle synchron bzw. phasengleich ansteuerbar sind, wobei jeder Kanal mit einer anderen Frequenz ansteuerbar ist. Phasengleiches Ansteuern bedeutet das erstmalige, synchrone Anregen der Sendeelemente des Multielementultraschallwandlers. Empfangsseitig werden die Signale vom Ultraschallwandler analog vorverarbeitet, verstärkt und digitalisiert. Toleranzen in der Empfangselektronik können mit Hilfe von Kalibriermessungen bestimmt und in der Software der Recheneinheit korrigiert werden.

In einer weiteren besonders bevorzugten Ausführungsform weist das Luftultraschallsystem gemäß der Erfindung eine Kombination des Multielementultraschallwandlers mit dem Multikanalsender und dem Multikanalempfänger auf, die so gestaltet ist, dass die Vergrößerung der Bandbreite des Ultraschallsignals und dadurch die Durchführung einer einzigen Messung ermöglicht wird. In einer besonders geeigneten Ausführungsform nutzt das erfindungsgemäße Luftultraschallsystem in vorteilhafter Weise gezielt eine ringförmige Elektrodenstruktur, und zwar nicht nur zur Formung des Schallfeldes, sondern außerdem zur Bandbreitenvergrößerung durch gezielte unterschiedliche Frequenzansteuerung der einzelnen Elektroden. Dies unterscheidet sich grundlegend von konventionellen Systemen. Vorzugsweise werden Piezokompositwandler verwendet, bei denen die Zwischenräume zwischen den einzelnen Elektroden beispielsweise mit einem in der Ultraschalltechnik üblichen Kunststoff ausgegossen sind. Dies unterscheidet sich grundlegend von konventionellen Systemen.

Vorzugsweise ist die Sende- und die Empfangselektronik mit einer Recheneinheit verbunden. Als Recheneinheit ist jede bekannte Datenverarbeitungsanlage geeignet, wie z.B. ein PC, Laptop-Computer, Tablet-PC, Mobiltelefon, ein spezielles Steuergerät usw. Die Recheneinheit wirkt hierzu über eine Kommunikationsverbindung, beispielsweise kabelgebunden wie über eine serielle oder parallele Schnittstelle, USB-Verbindung, Mini-USB-Verbindung; oder WLAN-Verbindung oder Bluetooth-Verbindung, mit der Sende- und Empfangselektronik zusammen.

Die Ansteuer- und Auswertesoftware sind an sich konventionelle Lösungen, weisen jedoch Besonderheiten gemäß dem erfindungsgemäßen Ultraschallsystem und dem nachfolgend beschriebenen Verfahren auf, insbesondere betreffend die Ansteuerung der Einzelelemente des Multielementultraschallwandlers mit verschiedenen Frequenzen und die Bildung des Summenspektrums aus den Einzelspektren der Einzelelemente des Multielementultraschallwandlers bei der Auswertung der Ultraschallmessungen.

Die Erfindung stellt deshalb auch ein Computerprogrammprodukt zur Ansteuerung der Einzelelemente des Multielementultraschallwandlers mit verschiedenen Frequenzen bereit. In einer weiteren Ausführungsform stellt die Erfindung ein Computerprogrammprodukt zur Auswertung von Luftultraschallmessungen über einen großen Frequenzbereich, vorzugsweise über mindestens 80 % des Ultraschallfrequenzbereiches, insbesondere durch Bildung des Summenspektrums aus den Einzelspektren der Einzelelemente des erfindungsgemäßen Multielementultraschallwandlers bereit.

Die Erfindung stellt weiterhin ein Verfahren zur Breitbandmessung von Prüfkörpern mit Multielementultraschallschallwandlern, insbesondere Multielement-Luftultraschallschallwandlern, bereit, wobei in dem Verfahren das zuvor beschriebene Luftultraschallsystem verwendet wird.

Die zuvor beschriebenen Vorteile und vorteilhaften Ausführungsformen für das erfindungsgemäße Luftultraschallsystem und den erfindungsgemäßen Multielementultraschallwandler gelten gleichermaßen für das nachfolgend beschriebene Verfahren, so dass auf das zuvor genannte Bezug genommen wird.

In einer bevorzugten Ausführungsform weist das Verfahren die Schritte auf:
- Ansteuern der Sendeelemente des Multielementultraschallwandlers mit unterschiedlichen Frequenzen;
- Aussenden eines breitbandigen Ultraschallsignals durch die Sendeelemente des Multielementultraschallwandlers;
- Empfangen/Messen des breitbandigen Ultraschallsignals durch die Empfangselemente des Multielementultraschallwandlers und Bildung von Einzelspektren;
- Analoge Vorverarbeitung, Verstärkung und Digitalisierung der von den Empfangselementen des Multielementultraschallwandlers empfangenen Ultraschallsignale; und
- Auswertung der empfangenen Ultraschallsignale.

Mittels analoger Vorverarbeitung, Verstärkung und Digitalisierung der von den Empfangselementen des Multielementultraschallwandlers empfangenen Ultraschallsignale wird ein Spektrum gebildet, das sich aus der Summe der überlagerten Einzelspektren ergibt. Durch die Anzahl der Einzelelemente und deren Frequenzabstufung kann die Form des Spektrums entsprechend beeinflusst werden. Es gelten die Gesetzmäßigkeiten des Fouriertheorems, die dem Fachmann bekannt sind. Toleranzen in der Empfangselektronik können mit Hilfe von Kalibriermessungen bestimmt und in der Software der Recheneinheit korrigiert werden.

Die Auswertung der Spektren erfolgt unter Ausnutzung dispersiver Eigenschaften der zu untersuchenden Prüflinge in Bezug auf die Wechselwirkung mit Ultraschall. Dabei tragen sowohl Materialeigenschaften, wie zum Beispiel frequenzabhängige Dämpfung, als auch Geometrieeigenschaften, wie zum Beispiel frequenzabhängiges Streuverhalten an Grenzflächen zur Veränderung des gemessenen Ultraschallsignals bei. Materialeigenschaften und Oberflächenstruktur der Prüflinge beeinflussen das Messsignal. Beispielsweise ist das von Materialoberflächen reflektierte Signal viel höher als das aus dem Material reflektierte Signal. Mit dem erfindungsgemäßen Verfahren und Luftultraschallsystem ist es möglich, sowohl oberflächenbedingte Einflüsse des Messsignals als auch die Überlagerung des eigentlichen zu messenden Signals (von Oberfläche oder aus Material) zu unterdrücken bzw. zu entfernen.

Dadurch ist es möglich, neuartige Kontrastmechanismen, zum Beispiel durch Korrelationsverfahren zwischen Messungen unterschiedlicher Frequenzen, zu erreichen. Die Vergrößerung der effektiven Bandbreite durch den kombinierten Einsatz der Multielementultraschallwandler und dem Multikanal-Messsystem ermöglicht dabei die Durchführung einer einzigen Messung. Dies eliminiert insbesondere den Einfluss der Wandlermontage bei ähnlich durchgeführten Analysen unter Verwendung von mehreren Messungen mit unterschiedlichen Messfrequenzen.

Alternativ kann das erfindungsgemäße Verfahren noch einen Schritt der Fehlerklassifizierung umfassen, wobei mittels der Fehlerklassifizierung die Art und die Schwere des Materialfehlers erkannt werden.

Das erfindungsgemäße Verfahren und Luftultraschallsystem eignen sich zur Breitbandmessung von Fügeverbindungen, Kompositmaterialien und Materialverbunden in verschiedenen Bereichen. Besonders geeignet sind das erfindungsgemäße Verfahren und Luftultraschallsystem bei der Prüfung von Fügeverbindungen unterschiedlicher Materialarten, wie beispielsweise im Leichtbau. Hier ist es möglich, schwer detektierbare Delaminationen (Weak oder Kissing Bonds) zu detektieren. Besondere Vorteile haben das erfindungsgemäße Verfahren und Luftultraschallsystem auch bei der Prüfung von Fehlern in Sandwichstrukturen. Hier ist es möglich, Fehler bei Materialkombinationen unterschiedlicher Klassen (z.B. Blech und Klebstoff) zu detektieren. Allgemein gut geeignet sind das erfindungsgemäße Verfahren und Luftultraschallsystem bei der Prüfung von Fehlern in Klebeverbindungen wegen der dispersiven Eigenschaften der Klebstoffe. Letztlich sind das erfindungsgemäße Verfahren und Luftultraschallsystem auch vorteilhaft gegenüber konventionellen Systemen bei der Oberflächencharakterisierung von Werkstoffen und werden beispielsweise verwendet zur Prüfung und Unterscheidung der Oberflächengüte und zur Unterscheidung zwischen Oberflächen- und Volumenungänzen. In Kompositmaterialien sowie Materialverbunden können mit dem erfindungsgemäßen Verfahren und Luftultraschallsystem Fehler wie Lufteinschlüsse, Delaminationen, Klebefehler, Verunreinigungen, Kanäle, Risse und Kissing Bonds detektiert werden.

Die Erfindung wird nachfolgend anhand von 11 Zeichnungen und eines Ausführungsbeispieles näher erläutert.

Es zeigen:
- **Figur 1:**: einen Multielementultraschallwandler;
- **Figur 2:**: die Ermittlung des Summenspektrums gemäß der Erfindung;
- **Figur 3:**: eine Ausführungsform des prinzipiellen Aufbaus des erfindungsgemäßen Luftultraschallsystems für Durchschallbetrieb; und
- **Figur 4:**: eine Ausführungsform des prinzipiellen Aufbaus des erfindungsgemäßen Luftultraschallsystems in der Pitch-Catch-Konfiguration.
- **Figur 5:**: eine Ausführungsform des prinzipiellen Aufbaus des erfindungsgemäßen Luftultraschallsystems für Reflexionsbetrieb;
- **Figur 6**: das gemessene Spektrum eines herkömmlichen Ultraschallwandlers;
- **Figur 7**: das gemessene Spektrum des erfindungsgemäßen Multielementultraschallwandlers;
- **Figur 8**: einen Referenzscan einer Klebeprobe, durchgeführt mit einem herkömmlichen Ultraschallwandler;
- **Figur 9**: Scans einer Klebeprobe, durchgeführt mit dem erfindungsgemäßen Multielementultraschallwandler;
- **Figur 10**: die spektrale Auswertung der Scans der Klebeprobe; und
- **Figur 11**: eine Gegenüberstellung von Ausschnitten mit Defekten in der Klebeprobe.

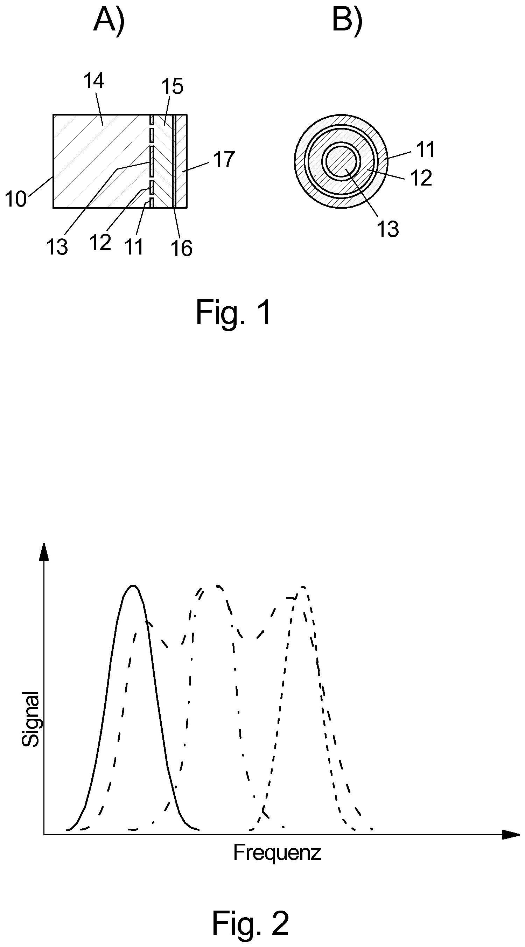

Der in **Figur 1** gezeigte Multielementultraschallwandler 10 weist beispielhaft drei ringförmige Elektroden 11, 12 und 13 auf. Figur 1A zeigt einen Querschnitt des Multielementultraschallwandlers 10. Der Multielementultraschallwandler 10 weist weiterhin einen Dämpfungskörper 14, piezoelektrisches Material 15, die Elektrode 16 und eine Anpassschicht 17 auf. Figur 1B zeigt die Elektrodenstruktur (Struktur der Einzelelemente) des Multielementultraschallwandlers 10 in Frontansicht. Die Anregung der Einzelelemente 11, 12 und 13 kann beispielsweise mit folgenden Frequenzen erfolgen:

| Elektrode | Anregungsfrequenz, Beispiel 1 | Anregungsfrequenz, Beispiel 2 |
|---|---|---|
| 11 | 150 kHz | 380 kHz |
| 12 | 200 kHz | 400 kHz |
| 13 | 250 kHz | 420 kHz |

Durch die Anzahl der Elemente und die Frequenzabstufung kann die Form des Spektrums entsprechend beeinflusst werden. Es gelten die Gesetzmäßigkeiten des Fouriertheorems. Das daraus resultierende Spektrum ergibt sich aus der Summe der überlagerten Einzelspektren.

**Figur 2** zeigt eine Prinzipskizze der Ermittlung des Summenspektrums aus der Überlagerung von drei Einzelspektren, die beispielsweise mit Hilfe des in Figur 1 gezeigten Multielementultraschallwandlers erzeugt wurden, wobei das Spektrum A von einem ersten Ultraschallwandler, das Spektrum B von einem zweiten Ultraschallwandler und das Spektrum C von einem dritten Ultraschallwandler erzeugt wurden. Spektrum D zeigt das aus den Einzelspektren A, B und C ermittelte Summenspektrum. Dabei wurden die Sendeelemente des Multielementultraschallwandlers mit unterschiedlichen Frequenzen angeregt, wodurch die Sendeelemente des Multielementultraschallwandlers ein breitbandiges Ultraschallsignal, beispielsweise im Bereich von 150 kHz bis 250 kHz oder im Bereich von 380 kHz bis 420 kHz aussendeten. Das breitbandige Ultraschallsignal wurde von den Empfangselementen des Multielementultraschallwandlers empfangen. Anschließend erfolgte die analoge Vorverarbeitung, Verstärkung und Digitalisierung der von den Empfangselementen des Multielementultraschallwandlers empfangenen Ultraschallsignale und daraus die Bildung der Einzelspektren A, B und C. Aus den Einzelspektren A, B und C erfolgte die Bildung des Summenspektrums D.

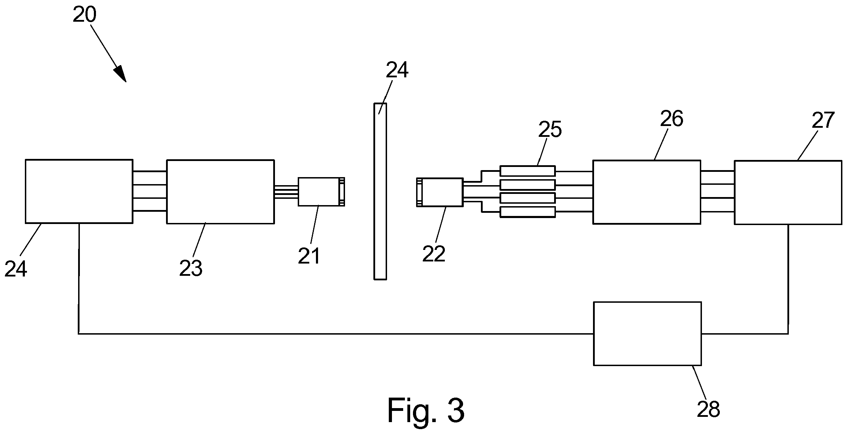

**Figur 3** zeigt den prinzipiellen Aufbau des Luftultraschallsystems 20 gemäß der Erfindung mit Sende- und Empfangselektronik. Die Sendeelektronik weist einen Signalprozessor 24, einen Digitalverstärker 23 und einen Multikanalsender 21 auf. Die Empfangselektronik weist einen Multikanalempfänger 22, einen Vorverstärker 25 pro Kanal, einen Verstärker 26 und einen Analog-Digital-Wandler 27 auf. Gezeigt ist weiterhin die Recheneinheit mit zentraler Prozessoreinheit (CPU) 28. Die hier gezeigte Ausführungsform wird für die Untersuchung von Prüflingen im Durchschallungsbetrieb benutzt, da sich Multikanalsender 21 und Multikanalempfänger 22 auf verschiedenen Seiten des Prüflings 29 befinden. In der gezeigten Ausführungsform verfügt das Luftultraschallsystem über vier Kanäle. Empfangsseitig werden die Signale vom Ultraschallwandler analog vorverarbeitet, verstärkt und digitalisiert. Toleranzen in der Empfangselektronik können mit Hilfe von Kalibriermessungen bestimmt und in der Software der Recheneinheit 28 korrigiert werden. Die Vergrößerung der effektiven Bandbreite durch den kombinierten Einsatz der Multielementultraschallwandler und dem Mehrkanal-Messsystem ermöglicht die Durchführung einer einzigen Messung. Dies eliminiert insbesondere den Einfluss der Wandlermontage bei einer ähnlich durchgeführten Analyse unter Verwendung von mehreren Messungen mit unterschiedlichen Messfrequenzen und Einzelwandlern.

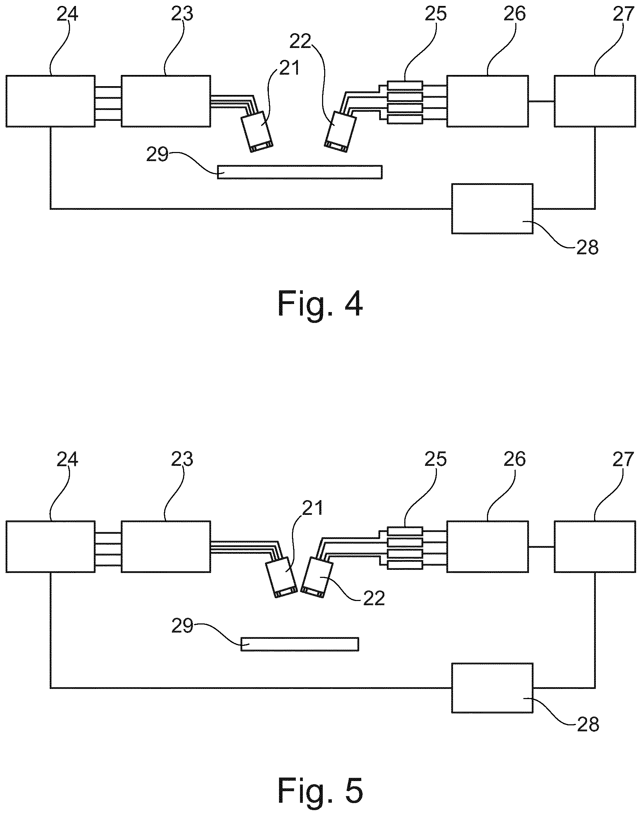

**Figur 4** zeigt den prinzipiellen Aufbau des Luftultraschallsystems 20 wie in Figur 3, jedoch in der Pitch-Catch-Konfiguration. Multikanalsender 21 und Multikanalempfänger 22 befinden sich auf der gleichen Seite des Prüflings 29. Ultraschallwellen in unendlich ausgedehnten Medien können sich als sog. Longitudinal-, Long-·oder Druckwellen ausbreiten, bei denen die Schwingungsrichtung parallel zur Ausbreitungsrichtung der Welle liegt, oder als Transversal-, Scher-oder Schubwellen, bei denen das Material senkrecht zur Ausbreitungsrichtung schwingt. Transversalwellen können nur in festen Körpern auftreten, da flüssige oder gasförmige Stoffe keine Scherkräfte aufnehmen können. Die Begrenzung eines Werkstoffs ermöglicht weitere charakteristische Wellenmoden wie Dehn-, Biege und Oberflächenwellen, sog. Stab-, Platten·oder Lambwellen. Mit der Pitch-Catch-Konfiguration können Materialfehler anhand der Änderung charakteristischer Wellenmoden identifiziert werden.

**Figur 5** zeigt den prinzipiellen Aufbau des Luftultraschallsystems 20 wie in Figur 3, jedoch für Reflexionsbetrieb, Multikanalsender 21 und Multikanalempfänger 22 befinden sich auf der gleichen Seite des Prüflings 29. Vom Multikanalsender werden Ultraschallwellen in den Prüfling eingekoppelt. Gemessen und ausgewertet werden von der Oberfläche des Prüflings und/oder dem Material bzw. der inneren Struktur des Prüflings reflektierte Ultraschallsignale.

### Ausführungsbeispiel - Vergleich des Multielementultraschallwandlers zu herkömmlichen Luftultraschallwandlern

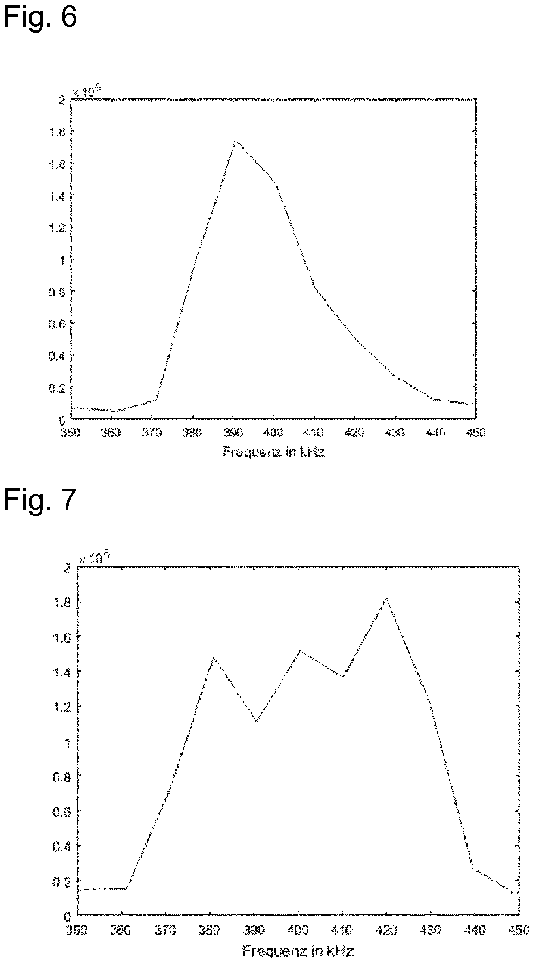

**Figur 6** zeigt das Spektrum des herkömmlichen Ultraschallwandlers CF400, **Figur 7** das Spektrum des erfindungsgemäßen Multielementultraschallwandlers CF400_3F. Der erfindungsgemäße Multielementultraschallwandler CF400_3F weist drei ringförmige, umeinander angeordnete Wandler 11, 12, 13 auf, wobei jeder Wandler mit einer unterschiedlichen Frequenz (niedrige Frequenz (380 kHz), mittlere Frequenz (400 kHz) bzw. hohe Frequenz (420 kHz)) angesteuert wird.

Es ist deutlich zu erkennen, dass die Bandbreite bei halber Amplitude (Maximum) bei dem erfindungsgemäßen Multielementultraschallwandler (Figur 7) breiter ist als bei herkömmlichen Luftultraschallwandlern (Figur 6). Zudem ist sind bei den drei verschiedenen Nennfrequenzen (380 kHz, 400 kHz und 420 kHz) der Einzelelemente Peaks im Gesamtspektrum ersichtlich.

Für die Durchführung von Vergleichsmessungen mit dem herkömmlichen Ultraschallwandler CF400 und dem erfindungsgemäßen Multielementultraschallwandler CF400_3F wurde ein Referenzprüfkörper hergestellt. Bei dem Referenzprüfkörper handelt es sich um zwei miteinander verklebte Platten, bei denen in eine der Platten ein Schriftzug und ein Logo der Fa. Sonotec eingefräst worden ist. Die eingefrästen Zeichen stellen künstliche Fehlstellen dar, die Luft beinhalten und somit bei der Luftultraschallmessung wie Lufteinschlüsse wirken. Ansonsten wurden die Platten gewissenhaft flächig verklebt.

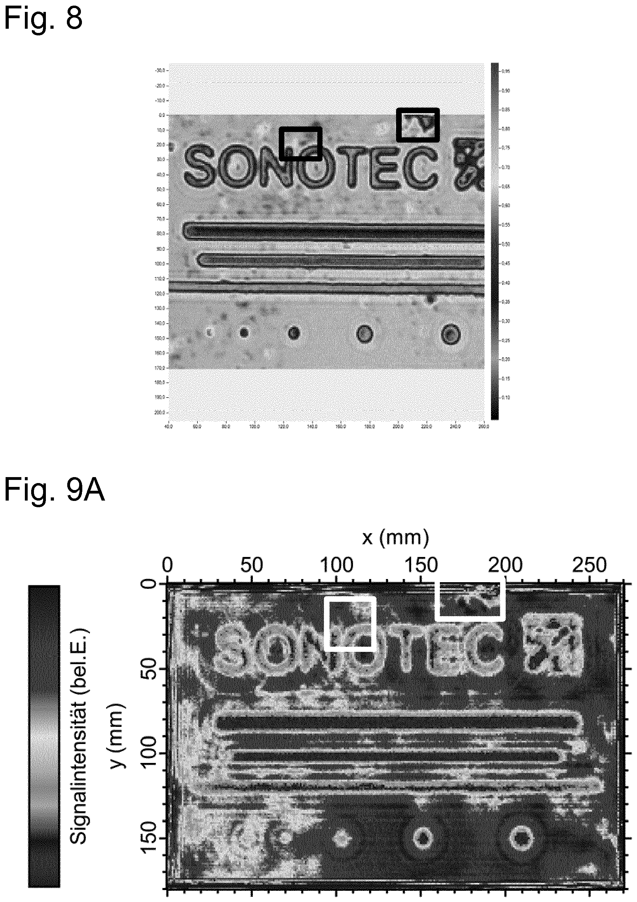

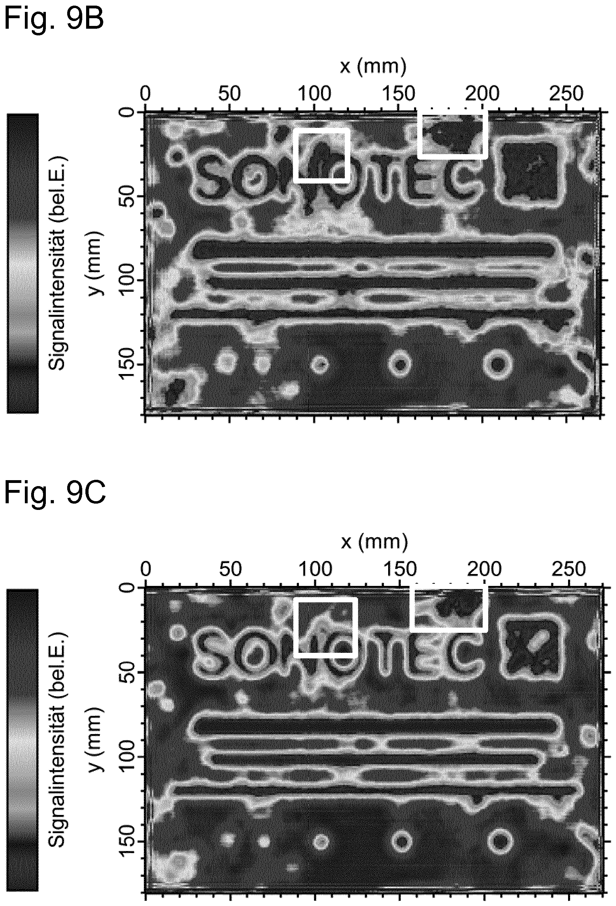

Für den Vergleich der Ultraschallwandler wurde ein Referenzscan mit handelsüblichen CF400 Prüfköpfen angefertigt und dieser als Amplitudenbild bei maximaler Amplitude ausgewertet. Das Ergebnis ist in **Figur 8** dargestellt. Dieser Scan wurde im Anschluss mit der erfindungsgemäßen Multielementultraschallwandler wiederholt. Die Auswertung der Amplitude erfolgte auf die drei Einzelfrequenzen gefiltert. Die Ergebnisse sind in den **Figuren 9A****,** **9B und 9C** gezeigt. Figur 9A zeigt das Scan-Ergebnis bei der tiefsten Nennfrequenz (380 kHz) des CF400_3F-Wandlers. Figur 9B zeigt das Scan-Ergebnis bei der mittleren Nennfrequenz (400 kHz) des CF400_3F-Wandlers. Figur 9C zeigt das Scan-Ergebnis bei der höchsten Nennfrequenz (420 kHz) des CF400_3F-Wandlers.

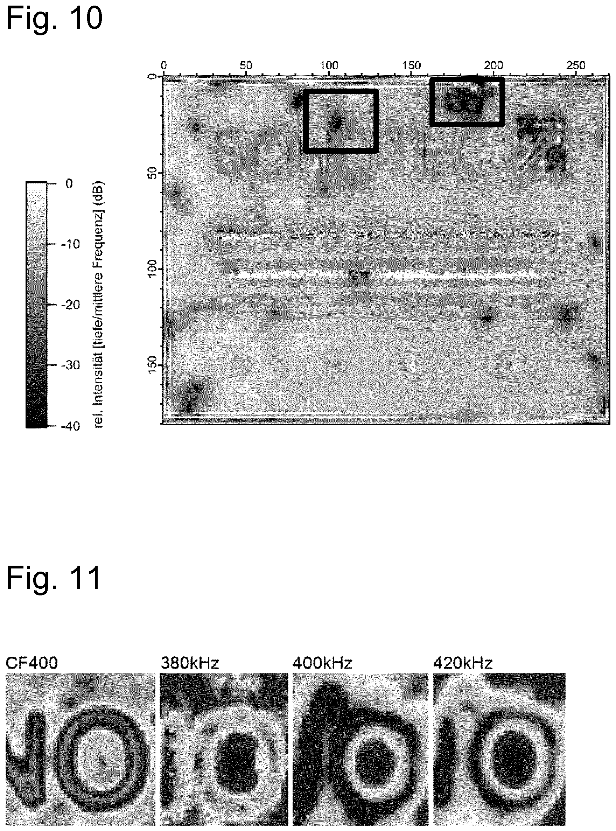

Bei dem Vergleich der Scan-Ergebnisse wurde ersichtlich, dass die Prüfmerkmale der Referenzplatte, also der SONOTEC Schriftzug und das Logo bei allen Frequenzen einschließlich der Frequenz des Referenz-Scans dargestellt werden. In der Verklebung sind jedoch an bestimmten Stellen Klebefehler enthalten, die nur frequenzabhängig zu erkennen waren. Solche Klebefehler befinden sich beispielsweise über dem zweiten "O" und über den Buchstaben "EC" im Schriftzug SONOTEC (hervorgehoben mit schwarzen bzw. weißen Kästen in den Figuren 8, 9A, 9B und 9C). **Figur 11** zeigt eine Gegenüberstellung von Ausschnitten des Bereiches über dem zweiten "O" im Schriftzug SONOTEC aus den Figuren 8, 9A, 9B und 9C. In der Referenzmessung mit dem schmalbandigen herkömmlichen Ultraschallwandler CF400 ist der Klebefehler über dem zweiten O nicht zu erkennen. Ebenso kann der Fehler bei der niedrigen Frequenz (380 kHz) des erfindungsgemäßen Multielementultraschallwandlers nicht erkannt werden. Bei den höheren Frequenzen (400 kHz und 420 kHz) kann der Fehler jedoch detektiert werden.

**Figur 10** zeigt die spektrale Auswertung der Messergebnisse. Die Frequenzabhängigkeit der Messergebnisse bei Klebeverbindungen im Bereich Luftultraschall eröffnet mit breitbandigen Wandlern die neue Möglichkeit einer spektralen Auswertung. Bei dieser Methode wird der Scan bei mehreren Frequenzen ausgewertet und die Ergebnisse miteinander verglichen. Das Ergebnis dieses Vergleiches (Figuren 10 und 11) zeigt, dass es insbesondere bei Verklebungen Fehlerarten gibt, die nur mit bestimmten Frequenzen verlässlich detektiert werden können. In Figur 10 sind diese Stellen, bei denen es in den verschiedenen Frequenzen zu signifikanten Abweichungen kommt, schwarz dargestellt. An den mit schwarzen Kästen markierten Fehlern wird das Potenzial der erfindungsgemäßen Breitbandwandler besonders deutlich. Die schwarzen Kästen markieren Fehler, welche mit den herkömmlichen Ultraschallwandlern entweder gar nicht oder deutlich zu klein detektiert werden, da diese nicht die erforderliche Bandbreite für eine verlässliche Fehlerdetektion aufweisen.

### Liste der Bezugszeichen

- 10: Multielementultraschallwandler
- 11, 12, 13: Elektroden, Wandler, Sendewandler, Empfangswandler
- 14: Dämpfungskörper
- 15: piezoelektrisches Material
- 16: Elektrode
- 17: Anpassschicht
- 20: Luftultraschallsystem
- 21: Sender, Multikanalsender
- 22: Empfänger, Multikanalempfänger
- 23: Digitalverstärker
- 24: Signalprozessor
- 25: Vorverstärker
- 26: Verstärker
- 27: Analog-Digitalwandler
- 28: Recheneinheit
- 29: Prüfling

## Patentansprüche

1. Luftultraschallsystem (20) zur luftgekoppelten Prüfung von Materialien, das einen Ultraschallwandler, Sende-Empfangselektronik mit Digitalisierer (27) und eine Recheneinheit (28) mit Ansteuer- und Auswertesoftware aufweist,
**dadurch gekennzeichnet, dass** der Ultraschallwandler ein Multielementultraschallwandler (10) ist und mindestens drei oder vier Sendeelemente und/oder Empfangselemente (11, 12, 13) aufweist, wobei die Sendeelemente und/oder Empfangselemente (11, 12, 13) ringförmig oder kreisförmig gestaltet sind und umeinander angeordnet sind; und die Sendeelemente (11, 12, 13) mit unterschiedlichen Frequenzen ansteuerbar sind, wobei ein erstes Sendeelement mit einer Frequenz von 370 bis 390 kHz, ein zweites Sendeelement mit einer Frequenz von 390 bis 410 kHz und ein drittes Sendeelement mit einer Frequenz von 410 bis 430 kHz angesteuert wird, die Sende-Empfangselektronik zum Ansteuern der mindestens drei oder vier, ring-oder kreisförmigen Sendeelemente des Multielementultraschallwandlers eingerichtet ist, wobei ein breitbandiges Ultraschallsignal ausgesendet und empfangen wird und daraus Einzelspektren gebildet werden; und die Recheneinheit eingerichtet ist, ein Spektrum zu bilden, das sich aus der Summe der überlagerten Einzelspektren der einzelnen Elemente des Multielementultraschallwandlers ergibt.

2. Luftultraschallsystem (20) nach Anspruch 1, **dadurch gekennzeichnet, dass** die Sendeelemente und/oder Empfangselemente (11, 12, 13) so gestaltet sind, dass durch das Ansteuern mehrerer Einzelelemente mit unterschiedlichen Frequenzen eine Erhöhung der Bandbreite des Multielementultraschallwandlers (10) erreicht wird.

3. Luftultraschallsystem (20) nach Anspruch 1 oder 2, wobei die Sendeelektronik einen Signalprozessor (24), einen digitalen Verstärker (23) und einen Sender (21) aufweist und die Empfangselektronik einen Empfänger (22), einen Vorverstärker (25), einen Verstärker (26) und einen analog-/digital (a/d)-Wandler (27) aufweist, **dadurch gekennzeichnet, dass** der Sender (21) ein Multikanalsender (21) und der Empfänger (22) ein Multikanalempfänger (22) ist, wobei der Sender (21) und der Empfänger (22) mindestens so viele Kanäle aufweisen wie der Multielementultraschallwandler (10).

4. Luftultraschallsystem (20) nach einem der Ansprüche 1 bis 3, wobei Sender (21) und Empfänger (22) in einem Prüfkopf enthalten sind, oder wobei Sender (21) und Empfänger (22) getrennt voneinander als separate Prüfköpfe ausgeführt sind.

5. Luftultraschallsystem (20) nach einem der Ansprüche 1 bis 4, wobei Sender (21) und Empfänger (22) so angeordnet sind, dass die Ultraschallprüfung im Reflexionsbetrieb durchführbar ist, oder wobei Sender (21) und Empfänger (22) so angeordnet sind, dass die Ultraschallprüfung im Durchschallungsbetrieb durchführbar ist, oder wobei Sender (21) und Empfänger (22) in einer Pitch-Catch Konfiguration angeordnet sind.

6. Luftultraschallsystem (20) nach einem der Ansprüche 3 bis 5, **dadurch gekennzeichnet dass** der Multikanalsender (21) so gestaltet ist, dass mit einer sehr hohen zeitlichen Genauigkeit alle Kanäle synchron ansteuerbar sind, wobei jeder Kanal mit einer anderen Frequenz ansteuerbar ist.

7. Luftultraschallsystem (20) nach einem der Ansprüche 3 bis 6, **dadurch gekennzeichnet dass** durch die Kombination des Multielementultraschallwandlers (10) mit dem Multikanalsender (21) und dem Multikanalempfänger (22) die Vergrößerung der Bandbreite des Ultraschallsignals und dadurch die Durchführung einer einzigen Messung ermöglicht wird.

8. Verfahren zur Breitbandmessung von Prüfkörpern mit Multielement-Luftultraschallschallwandlern (10), wobei in dem Verfahren ein Ultraschallsystem (20) nach einem der Ansprüche 1 bis 7 verwendet wird, **dadurch gekennzeichnet, dass** das Verfahren die Schritte aufweist:
• Ansteuern der drei oder vier, ring- oder kreisförmigen Sendeelemente (11, 12, 13) des Multielementultraschallwandlers (10), wobei ein erstes Sendeelement mit einer Frequenz von 370 bis 390 kHz, ein zweites Sendeelement mit einer Frequenz von 390 bis 410 kHz und ein drittes Sendeelement mit einer Frequenz von 410 bis 430 kHz angesteuert wird;
• Aussenden eines breitbandigen Ultraschallsignals durch die drei oder vier, ring-oder kreisförmigen Sendeelemente (11, 12, 13) des Multielementultraschallwandlers (10);
• Empfangen/Messen des breitbandigen Ultraschallsignals durch die drei oder vier, ring- oder kreisförmigen Empfangselemente des Multielementultraschallwandlers und Bildung von Einzelspektren;
• Analoge Vorverarbeitung, Verstärkung und Digitalisierung der von den Empfangselementen des Multielementultraschallwandlers (10) empfangenen Ultraschallsignale;
• Auswertung der empfangenen Ultraschallsignale;
**dadurch gekennzeichnet, dass** mittels der analogen Vorverarbeitung, Verstärkung und Digitalisierung der von den Empfangselementen des Multielementultraschallwandlers empfangenen Ultraschallsignale ein Spektrum gebildet wird, dass sich aus der Summe der überlagerten Einzelspektren der einzelnen Elemente des Multielementultraschallwandlers (10) ergibt.

9. Verfahren nach Anspruch 8 oder Luftultraschallsystem (20) nach einem der Ansprüche 1 bis 7, **dadurch gekennzeichnet, dass** der Multielementultraschallwandler (10) mindestens 3, 4, 5 oder mehr ring- oder kreisförmige Sendeelemente und/oder Empfangselemente (11, 12, 13) aufweist und mindestens 3, 4, 5 oder mehr Ultraschallsignale mit unterschiedlichen Frequenzen aussendet und empfängt.

10. Verfahren nach Anspruch 8 oder 9 oder Luftultraschallsystem (20) nach einem der Ansprüche 1 bis 7, **dadurch gekennzeichnet, dass** die aktiven ring- oder kreisförmigen Einzelelemente (11, 12, 13) aus Kompositmaterialien bestehen, die eine unterschiedliche Geometrie, insbesondere Dicke aufweisen, und dass die Frequenz des durch ein Sendeelement (11, 12, 13) ausgesendeten Ultraschallsignals durch die Geometrie des Kompositmaterials, aus dem das Sendeelement (11, 12, 13) besteht, bestimmt wird.

11. Verfahren nach einem der Ansprüche 8 bis 10 oder Luftultraschallsystem (20) nach einem der Ansprüche 1 bis 7, **dadurch gekennzeichnet, dass** Toleranzen in der Empfangselektronik mit Hilfe von Kalibriermessungen bestimmt und mittels einer Software bei der analogen Vorverarbeitung, Verstärkung und Digitalisierung der von den Empfangselementen des Multielementultraschallwandlers (10) empfangenen Ultraschallsignale korrigiert werden.

12. Verfahren nach einem der Ansprüche 8 bis 11 oder Luftultraschallsystem (20) nach einem der Ansprüche 1 bis 7, **dadurch gekennzeichnet, dass** mittels einer Fehlerklassifizierung die Art und die Schwere des Materialfehlers erkannt werden.

13. Verwendung des Verfahrens oder des Luftultraschallsystems (20) nach einem der Ansprüche 1 bis 12 zur Oberflächencharakterisierung und/oder zur Prüfung von Kompositmaterialien, Klebeverbindungen und Materialverbunden auf Fehler, wie Lufteinschlüsse, Delaminationen, Klebefehler, Verunreinigungen, Kanäle, Risse und Kissing Bonds.

## Claims

1. Airborne ultrasound system (20) for the air-coupled testing of materials, which has an ultrasonic transducer, transmitting/receiving electronics having a digitizer (27), and a computing unit (28) having actuating and evaluating software,
**characterized in that** the ultrasonic transducer is a multielement ultrasonic transducer (10) and has at least three or four transmitting elements and/or receiving elements (11, 12, 13), wherein the transmitting elements and/or receiving elements (11, 12, 13) are in annular or circular form and are arranged around one another; and the transmitting elements (11, 12, 13) are actuatable at different frequencies, wherein a first transmitting element is actuated at a frequency of from 370 to 390 kHz, a second transmitting element is actuated at a frequency of from 390 to 410 kHz and a third transmitting element is actuated at a frequency of from 410 to 430 kHz, the transmitting/receiving electronics are configured for actuating the at least three or four annular or circular transmitting elements of the multielement ultrasonic transducer, wherein a wideband ultrasonic signal is transmitted and received and individual spectra are formed therefrom; and the computing unit is configured to form a spectrum that is obtained from the sum of the overlaid individual spectra of the individual elements of the multielement ultrasonic transducer.

2. Airborne ultrasound system (20) according to Claim 1, **characterized in that** the transmitting elements and/or receiving elements (11, 12, 13) are in a form such that the actuating of multiple individual elements at different frequencies achieves an increase in the bandwidth of the multielement ultrasonic transducer (10).

3. Airborne ultrasound system (20) according to Claim 1 or 2, wherein the transmitting electronics have a signal processor (24), a digital amplifier (23) and a transmitter (21), and the receiving electronics have a receiver (22), a preamplifier (25), an amplifier (26) and an analogue-to-digital (a/d) converter (27), **characterized in that** the transmitter (21) is a multichannel transmitter (21) and the receiver (22) is a multichannel receiver (22), wherein the transmitter (21) and the receiver (22) have at least as many channels as the multielement ultrasonic transducer (10).

4. Airborne ultrasound system (20) according to one of Claims 1 to 3, wherein the transmitter (21) and the receiver (22) are contained in a test head, or wherein the transmitter (21) and the receiver (22) are embodied separately from one another as separate test heads.

5. Airborne ultrasound system (20) according to one of Claims 1 to 4, wherein the transmitter (21) and the receiver (22) are arranged such that the ultrasonic testing is performable in the reflection mode, or wherein the transmitter (21) and the receiver (22) are arranged such that the ultrasonic testing is performable in the through-transmission mode, or wherein the transmitter (21) and the receiver (22) are arranged in a pitch-catch configuration.

6. Airborne ultrasound system (20) according to one of Claims 3 to 5, **characterized in that** the multichannel transmitter (21) is in a form such that all channels are actuatable synchronously with a very high level of timing accuracy, wherein each channel is actuatable at a different frequency.

7. Airborne ultrasound system (20) according to one of Claims 3 to 6, **characterized in that** the combination of the multielement ultrasonic transducer (10) with the multichannel transmitter (21) and the multichannel receiver (22) allows the increase in the bandwidth of the ultrasonic signal and, as a result, the performance of a single measurement.

8. Method for wideband measurement of test specimens using multielement airborne ultrasound sonic transducers (10), wherein the method involves an ultrasound system (20) according to one of Claims 1 to 7 being used, **characterized in that** the method has the steps of:
• actuating the three or four annular or circular transmitting elements (11, 12, 13) of the multielement ultrasonic transducer (10), wherein a first transmitting element is actuated at a frequency of from 370 to 390 kHz, a second transmitting element is actuated at a frequency of from 390 to 410 kHz and a third transmitting element is actuated at a frequency of from 410 to 430 kHz;
• transmitting a wideband ultrasonic signal by means of the three or four annular or circular transmitting elements (11, 12, 13) of the multielement ultrasonic transducer (10);
• receiving/measuring the wideband ultrasonic signal by means of the three or four annular or circular receiving elements of the multi-element ultrasonic transducer and formation of individual spectra;
• analogue preprocessing, amplification and digitization of the ultrasonic signals received by the receiving elements of the multielement ultrasonic transducer (10);
• evaluation of the received ultrasonic signals;
**characterized in that** the analogue preprocessing, amplification and digitization of the ultrasonic signals received by the receiving elements of the multielement ultrasonic transducer are used to form a spectrum that is obtained from the sum of the overlaid individual spectra of the individual elements of the multielement ultrasonic transducer (10).

9. Method according to Claim 8 or airborne ultrasound system (20) according to one of Claims 1 to 7, **characterized in that** the multielement ultrasonic transducer (10) has at least 3, 4, 5 or more annular or circular transmitting elements and/or receiving elements (11, 12, 13) and transmits and receives at least 3, 4, 5 or more ultrasonic signals at different frequencies.

10. Method according to Claim 8 or 9 or airborne ultrasound system (20) according to one of Claims 1 to 7, **characterized in that** the active annular or circular individual elements (11, 12, 13) are made from composite materials that have a different geometry, in particular thickness, and **in that** the frequency of the ultrasonic signal transmitted by a transmitting element (11, 12, 13) is determined by the geometry of the composite material from which the transmitting element (11, 12, 13) is made.

11. Method according to one of Claims 8 to 10 or airborne ultrasound system (20) according to one of Claims 1 to 7, **characterized in that** tolerances in the receiving electronics are determined by means of calibration measurements and corrected by means of software during the analogue preprocessing, amplification and digitization of the ultrasonic signals received by the receiving elements of the multielement ultrasonic transducer (10).

12. Method according to one of Claims 8 to 11 or airborne ultrasound system (20) according to one of Claims 1 to 7, **characterized in that** defect classification is used to detect the type and severity of the material defect.

13. Use of the method or of the airborne ultrasound system (20) according to one of Claims 1 to 12 for surface characterization and/or for testing composite materials, adhesive joints and material composites for defects, such as air pockets, delaminations, adhesion defects, impurities, channels, cracks and kissing bonds.

## Revendications

1. Système d'ultrasons dans l'air (20) destiné au contrôle avec couplage aérien de matériaux, lequel possède un transducteur d'ultrasons, une électronique d'émission-réception avec numériseur (27) et une unité de calcul (28) avec logiciel d'excitation et d'interprétation, **caractérisé en ce que** le transducteur d'ultrasons est un transducteur d'ultrasons à éléments multiples (10) et possède au moins trois ou quatre éléments émetteurs et/ou éléments récepteurs (11, 12, 13), les éléments émetteurs et/ou les éléments récepteurs (11, 12, 13) étant de configuration annulaire ou circulaire et étant disposés les uns autour des autres ; et les éléments émetteurs (11, 12, 13) peuvent être excités avec des fréquences différentes, un premier élément émetteur étant excité avec une fréquence de 370 à 390 kHz, un deuxième élément émetteur avec une fréquence de 390 à 410 kHz et un troisième élément émetteur avec une fréquence de 410 à 430 kHz, l'électronique d'émission-réception avec numériseur étant conçue pour exciter les au moins trois ou quatre éléments émetteurs annulaires ou circulaires du transducteur d'ultrasons à éléments multiples, un signal ultrasonore à large bande étant émis et reçu et des spectres individuels étant formés à partir de celui-ci ; et l'unité de calcul est conçue pour former un spectre qui résulte de la somme des spectres individuels superposés des éléments individuels du transducteur d'ultrasons à éléments multiples.

2. Système d'ultrasons dans l'air (20) selon la revendication 1, **caractérisé en ce que** les éléments émetteurs et/ou les éléments récepteurs (11, 12, 13) sont configurés de telle sorte qu'une augmentation de la largeur de bande du transducteur d'ultrasons à éléments multiples (10) est obtenue par l'excitation de plusieurs éléments individuels avec des fréquences différentes.

3. Système d'ultrasons dans l'air (20) selon la revendication 1 ou 2, l'électronique d'émission possédant un processeur de signal (24), un amplificateur numérique (23) et un émetteur (21) et l'électronique de réception possédant un récepteur (22), un préamplificateur (25), un amplificateur (26) et un convertisseur analogique/numérique (A/N) (27), **caractérisé en ce que** l'émetteur (21) est un émetteur à canaux multiples (21) et le récepteur (22) un récepteur à canaux multiples (22), l'émetteur (21) et le récepteur (22) possédant au moins le même nombre de canaux que le transducteur d'ultrasons à éléments multiples (10).

4. Système d'ultrasons dans l'air (20) selon l'une des revendications 1 à 3, l'émetteur (21) et le récepteur (22) étant contenus dans une tête de contrôle, ou l'émetteur (21) et le récepteur (22) étant réalisés séparément l'un de l'autre sous la forme de têtes de contrôle distinctes.

5. Système d'ultrasons dans l'air (20) selon l'une des revendications 1 à 4, l'émetteur (21) et le récepteur (22) étant disposés de telle sorte que le contrôle aux ultrasons peut être réalisé en mode réflexion, ou l'émetteur (21) et le récepteur (22) étant disposés de telle sorte que le contrôle aux ultrasons peut être réalisé en mode sondage acoustique, ou l'émetteur (21) et le récepteur (22) étant disposés dans une configuration dite de « pitch-catch ».

6. Système d'ultrasons dans l'air (20) selon l'une des revendications 3 à 5, **caractérisé en ce que** l'émetteur à canaux multiples (21) est configuré de telle sorte que tous les canaux peuvent être excités de manière synchrone avec une très grande précision dans le temps, chaque canal pouvant être excité avec une fréquence différente.

7. Système d'ultrasons dans l'air (20) selon l'une des revendications 3 à 6, **caractérisé en ce que** l'agrandissement de la largeur de bande du signal ultrasonore et ainsi la réalisation d'une mesure unique sont rendus possibles par la combinaison du transducteur d'ultrasons à éléments multiples (10) avec l'émetteur à canaux multiples (21) et le récepteur à canaux multiples (22).

8. Procédé de mesure à large bande d'échantillons avec des transducteurs d'ultrasons à éléments multiples (10), un système d'ultrasons (20) selon l'une des revendications 1 à 7 étant utilisé dans le procédé, **caractérisé en ce que** le procédé comprend les étapes suivantes :
* excitation des trois ou quatre éléments émetteurs annulaires ou circulaires (11, 12, 13) du transducteur d'ultrasons à éléments multiples (10), un premier élément émetteur étant excité avec une fréquence de 370 à 390 kHz, un deuxième élément émetteur avec une fréquence de 390 à 410 kHz et un troisième élément émetteur avec une fréquence de 410 à 430 kHz ;
* émission d'un signal ultrasonore à large bande par les trois ou quatre éléments émetteurs annulaires ou circulaires (11, 12, 13) du transducteur d'ultrasons à éléments multiples (10) ;
* réception/mesure du signal ultrasonore à large bande par les trois ou quatre éléments récepteurs annulaires ou circulaires du transducteur d'ultrasons à éléments multiples et formation de spectres individuels ;
* prétraitement analogique, amplification et numérisation des signaux ultrasonores reçus par les éléments récepteurs du transducteur d'ultrasons à éléments multiples (10) ;
* interprétation des signaux ultrasonores reçus ;
**caractérisé en ce qu'**un spectre qui résulte de la somme des spectres individuels superposés des éléments individuels du transducteur d'ultrasons à éléments multiples (10) est formé au moyen du prétraitement analogique, de l'amplification et de la numérisation des signaux ultrasonores reçus par les éléments récepteurs du transducteur d'ultrasons à éléments multiples.

9. Procédé selon la revendication 8 ou système d'ultrasons dans l'air (20) selon l'une des revendications 1 à 7, **caractérisé en ce que** le transducteur d'ultrasons à éléments multiples (10) possède au moins 3, 4, 5 ou plus éléments émetteurs et/ou éléments récepteurs (11, 12, 13) annulaires ou circulaires et émet et reçoit au moins 3, 4, 5 ou plus signaux ultrasonores ayant des fréquences différentes.

10. Procédé selon la revendication 8 ou 9 ou système d'ultrasons dans l'air (20) selon l'une des revendications 1 à 7, **caractérisé en ce que** les éléments individuels (11, 12, 13) annulaires ou circulaires actifs se composent de matériaux composites qui possèdent une géométrie, notamment une épaisseur, différente, et **en ce que** la fréquence du signal ultrasonore émis par un élément émetteur (11, 12, 13) est déterminée par la géométrie du matériau composite duquel se compose l'élément émetteur (11, 12, 13).

11. Procédé selon l'une des revendications 8 à 10 ou système d'ultrasons dans l'air (20) selon l'une des revendications 1 à 7, **caractérisé en ce que** les tolérances dans l'électronique de réception sont déterminées à l'aide de mesures d'étalonnage et corrigées au moyen d'un logiciel lors du prétraitement analogique, de l'amplification et de la numérisation des signaux ultrasonores reçus par les éléments récepteurs du transducteur d'ultrasons à éléments multiples (10).

12. Procédé selon l'une des revendications 8 à 11 ou système d'ultrasons dans l'air (20) selon l'une des revendications 1 à 7, **caractérisé en ce que** la nature et la gravité du défaut du matériau sont reconnues au moyen d'une classification des défauts.

13. Utilisation du procédé ou du système d'ultrasons dans l'air (20) selon l'une des revendications 1 à 12 pour la caractérisation de surface et/ou pour le contrôle de matériaux composites, d'assemblages collés et de liaisons de matériaux en vue d'y déceler des défauts, comme des inclusions d'air, des délaminations, des défauts de collage, des impuretés, des canaux, des fissures et des manques de pénétration en racine.
